# NOUVEAU FASCICULE DE BREVET EUROPEEN

(11) **EP 0 754 610 B2**
(45) Date de publication et mention de la décision concernant l'opposition: **05.03.2008**
(45) Mention de la délivrance du brevet: 13.09.2000
(21) Numéro de dépôt: 96401391.6
(22) Date de dépôt: 24.06.1996
(51) Int. Cl.: B60T 13/74, B60T 7/08

(54) **Système de frein de stationnement pour véhicule automobile**
Feststellbremsanlage für Kraftfahrzeug
Parking brake system for motor vehicle

(30) Priorité: 19.07.1995 FR 9508743
(43) Date de publication de la demande: 22.01.1997
(73) Titulaire: AUTOMOBILES PEUGEOT, 75116 Paris (FR); AUTOMOBILES CITROEN, 92200 Neuilly-sur-Seine (FR)
(72) Inventeur: Bailleux, François, 91400 Val D'Albian (FR)
(74) Mandataire: Fernandez, Francis Lionel

(56) Documents cités:
- WO-A-92/01590
- DE-A- 4 129 934
- US-A- 4 629 043
- US-A- 4 795 002

## Description

La présente invention concerne un système de frein mécanique, notamment pour véhicule automobile, tel que décrit par exemple dans le document US-A-4,629,043.

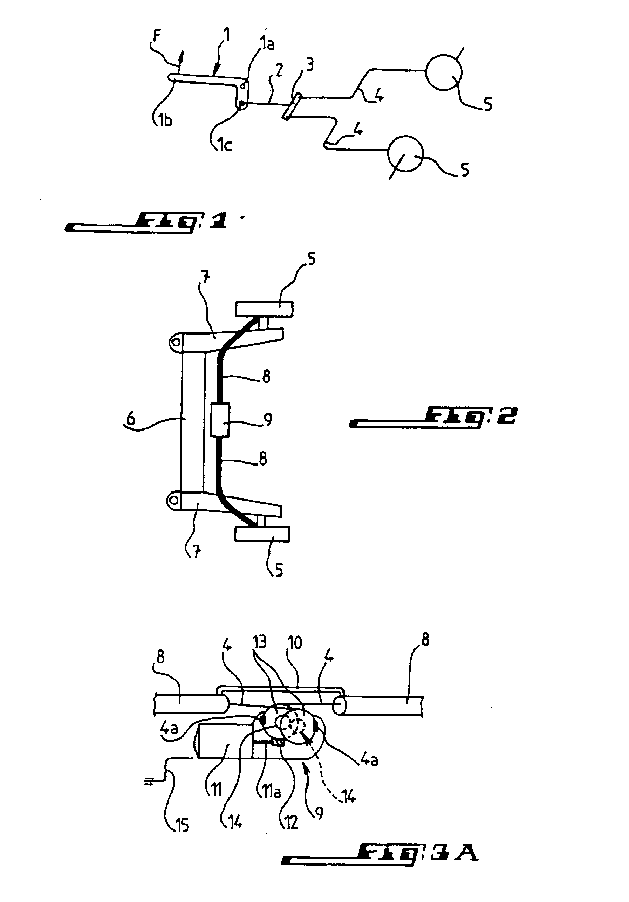

On connaît déjà des systèmes de frein mécanique, tels que celui représenté sur la figure 1 des dessins annexés, comportant un levier de frein à main 1 en forme générale de L, articulé sur un axe 1a, l'une 1b de ses extrémités servant de poignée de commande pour l'utilisateur et l'autre extrémité 1c étant reliée par l'intermédiaire d'un tirant 2 à un palonnier 3 qui répartit les efforts par l'intermédiaire de câbles 4 sur deux récepteurs de frein 5 engendrant un couple de freinage sur les roues du véhicule (non représentées).

Ce système a notamment pour inconvénient le nécessaire compromis entre la course angulaire de la poignée 1b du levier 1 et l'effort indiqué par la flèche F à exercer sur celle-ci par le conducteur lors de l'actionnement du frein à main.

En effet, l'objectif étant que le conducteur ait le minimum d'effort à exercer, la longueur de la course angulaire du levier est souvent excessive voire inacceptable.

D'autre part, un tel système nécessite un réglage précis en chaîne de fabrication de l'agencement des câbles et le trajet de ces derniers dans le véhicule est généralement compliqué et présente une longueur importante.

On connaît également un dispositif d'actionnement d'un frein de stationnement sur un véhicule à moteur, comprenant un capteur de vitesse du véhicule, un levier de frein à main dont l'inclinaison est détectée par un capteur de position, un moteur électrique dont l'arbre moteur entraîne une vis auto-bloquante sur laquelle est montée un écrou couplé par l'intermédiaire de câbles gainés à des organes d'actionnement du frein de stationnement, et un circuit de régulation de la position de l'écrou sur la vis en fonction de sa position effective détectée par un autre capteur de position.

Toutefois, ce dispositif est de mise en oeuvre relativement complexe, faisant intervenir un grand nombre de capteurs, ce qui réduit sa fiabilité et sa vitesse d'exécution.

En outre, ce dispositif ne prend en compte que la position de l'écrou et non les variations de tension des câbles de liaison avec les freins de stationnement.

La présente invention a donc pour but d'éliminer les inconvénients précités et de proposer un système de frein mécanique qui tienne compte des variations de tension dans les câbles et qui soit de mise en oeuvre plus simple.

A cet effet, la présente invention a pour objet un système de frein mécanique, selon la revendication 1.

Dans un premier mode de réalisation du système de l'invention, les moyens de régulation directe de la tension des câbles sont constitués d'un circuit, par exemple électromagnétique, faisant basculer en fonction de l'état détecté du véhicule, l'alimentation du moteur électrique dans l'une d'au moins des deux valeurs d'intensité de courant possibles correspondant aux tensions à appliquer sur les câbles.

Dans un autre mode de réalisation de l'invention, les moyens de régulation directe de la tension des câbles sont constitués d'au moins une paire d'interrupteurs et une paire de butées en vis-à-vis, au moins l'une desdites paires étant déplaçable avec la gaine d'au moins un câble, l'un des interrupteurs étant sélectivement incorporé en position de fermeture au circuit d'alimentation en courant du moteur électrique en fonction de l'état détecté du véhicule, les interrupteurs et les butées en vis-à-vis étant agencés de sorte que la mise en contact de l'une des butées avec l'interrupteur associé provoque son ouverture interrompant l'alimentation du moteur, les courses relatives de chaque interrupteur par rapport à la butée associée étant différentes et déterminées pour correspondre aux différentes tensions à appliquer sur le câble.

Selon une autre caractéristique de l'invention, les moyens de régulation directe de la tension des câbles comportent des moyens d'autorégulation de cette tension pour compenser les éventuelles chutes de tension des câbles dues à des paramètres extérieurs, tels que la dilatation de certaines pièces du frein en fonction de la température.

Dans le premier mode de réalisation précité, les moyens d'autorégulation comportent une unité de temporisation destinée à interrompre l'alimentation du moteur électrique de manière séquentielle, l'effort de tension exercé par le moteur sur les câbles étant maintenu pendant les intervalles d'interruption par l'irréversibilité du moteur et les éventuelles variations de longueur du câble étant rattrapées par la mise sous tension du moteur électrique pendant le reste du temps.

Dans l'autre mode de réalisation de l'invention, les moyens d'autorégulation consistent à maintenir constamment sous tension le circuit d'alimentation précité même lorsque l'interrupteur est en position ouverte, de sorte qu'une perte de contact entre l'interrupteur et la butée associée, résultant par exemple d'une chute de tension dans le câble, provoque la fermeture du circuit d'alimentation du moteur électrique jusqu'à ce que l'interrupteur vienne à nouveau en contact avec la butée.

Selon une autre caractéristique de l'invention, le circuit électromagnétique précité comporte un électro-aimant apte à faire sélectivement basculer l'alimentation du moteur électrique vers l'une d'une pluralité de branches en parallèle ayant des résistances différentes, en fonction de l'état détecté du véhicule.

On peut prévoir que l'interrupteur et la butée associée soient solidaires en déplacement respectivement de l'extrémité libre de deux gaines de câble distinctes qui sont reliées ensemble par un moyen élastique.

Selon une autre caractéristique de l'invention, la paire de butées précitées forme une seule pièce intercalée entre les extrémités libres de deux gaines distinctes par l'intermédiaire de deux moyens élastiques de raideurs différentes ou identiques, les extrémités opposées de ladite pièce faisant face respectivement à l'un des interrupteurs de ladite paire d'interrupteurs attachés aux extrémités libres des gaines.

On peut prévoir dans ce cas que la pièce forme un arc de cercle déplaçable en translation circulaire entre les extrémités libres des gaines qui définissent entre elles un logement en V pour le bloc moteur.

Selon encore une autre caractéristique de l'invention, le moteur électrique précité est à entraînement à vis sans fin de type auto-bloquant rendant le moteur irréversible lorsque son alimentation en courant est coupée, ladite vis sans fin engrenant avec une roue dentée ou analogue ayant une partie formant tambour sur laquelle vient s'enrouler au moins l'un des câbles précités.

Dans une variante de réalisation de l'invention, deux câbles s'étendant sensiblement en sens opposés sont attachés à une même roue dentée, de préférence en deux points diamétralement opposés de celle-ci, et viennent s'enrouler sur deux parties distinctes de ladite roue.

Dans une autre variante de réalisation, la roue dentée entraînée par le moteur et sur laquelle s'enroule un câble engrène avec une autre roue dentée sur laquelle vient s'enrouler en sens opposé un autre câble.

Dans ce cas, les deux roues dentées précitées engrènent mutuellement par l'intermédiaire de pignons de plus faible diamètre ou par leur périphérie dentée.

On peut également prévoir que les deux câbles précités qui s'étendent en sens opposés en direction d'un récepteur de frein se croisent à l'intersection des deux roues dentées.

Dans encore une autre variante de réalisation, un unique câble vient s'enrouler sur la roue dentée entraînée par le moteur, ce câble étant relié à un palonnier auquel sont fixés les deux câbles reliés aux récepteurs de frein.

Selon une autre caractéristique de l'invention, la première tension dans les câbles correspond à une force de décélération de l'ordre de 2m.s⁻², et la seconde tension correspond à une force de freinage assurant le maintien du véhicule avec poids total en charge à l'arrêt dans une pente d'environ 30 %.

Les moyens de détection de vitesse précités peuvent être constitués par le système anti-blocage des freins, communémment désigné par ABS.

L'invention sera mieux comprise et d'autres buts, caractéristiques et avantages de celle-ci apparaîtront plus clairement au cours de la description explicative qui va suivre de plusieurs modes de réalisation particuliers actuellement préférés de l'invention, donnés uniquement à titre d'exemples illustratifs et non limitatifs, en référence aux dessins schématiques annexés, dans lesquels :

La figure 1 est une vue schématique d'un système de frein mécanique antérieur classique pour véhicule automobile.

La figure 2 est une vue schématique et de dessus du système de frein mécanique de l'invention implanté sur un train arrière de véhicule automobile.

Les figures 3A à 3F sont des vues schématiques et partielles représentant plusieurs modes de réalisation particuliers des moyens d'actionnement du système de frein mécanique de l'invention.

Les figures 4A à 4C sont des vues schématiques et partielles représentant respectivement trois variantes de réalisation des moyens de régulation du système de frein mécanique de l'invention.

La figure 5 est un schéma électrique représentant schématiquement un autre mode de réalisation des moyens de régulation du système de frein mécanique de l'invention.

La figure 6 est un schéma synoptique fonctionnel du système de frein mécanique de l'invention.

La figure 2 représente une vue d'ensemble et de dessus d'un train arrière de véhicule automobile comportant le système de l'invention.

Ce train de véhicule automobile comporte un essieu 6 relié aux récepteurs de frein 5 par des bras latéraux 7.

Les câbles de frein 4 sont logés dans des gaines 8 qui relient les récepteurs de frein 5 à un bloc moto-réducteur 9 servant à l'actionnement des câbles.

On voit mieux sur la figure 3A que les deux gaines opposées 8 sont reliées ensemble par une pièce 10 qui peut être adaptée pour maintenir rigidement les deux gaines précitées.

Le groupe moto-réducteur 9 comporte dans la variante illustrée sur la figure 3A un moteur électrique 11 dont l'arbre de sortie 11a entraîne en rotation axiale une vis sans fin 12 qui engrène avec une roue dentée 13 sur laquelle s'enroule un câble 4 fixé à cette dernière en 4a.

Une autre roue par exemple identique 13 engrène avec la première roue et tourne en sens inverse pour agir sur l'autre câble 4 qui est enroulé sur celle-ci.

On voit sur la figure 3A que les deux roues dentées 13 comportent des pignons de plus faible diamètre 14 engrenant mutuellement, les câbles venant s'enrouler autour de la périphérie desdites roues 13.

Le moteur 11 à entraînement à vis 12 est généralement prévu auto-bloquant, c'est-à-dire avec un rapport de démultiplication très important de sorte que l'entraînement soit quasiment irréversible en l'absence d'alimentation électrique.

On prévoit alors une manivelle de secours 15 s'engageant à travers une ouverture à l'arrière du moteur 11 afin de pouvoir ajuster manuellement la tension dans les câbles, en cas de défaillance de la commande électrique ou d'une panne de la batterie, en faisant tourner manuellement l'arbre moteur 11a dans un sens ou dans l'autre.

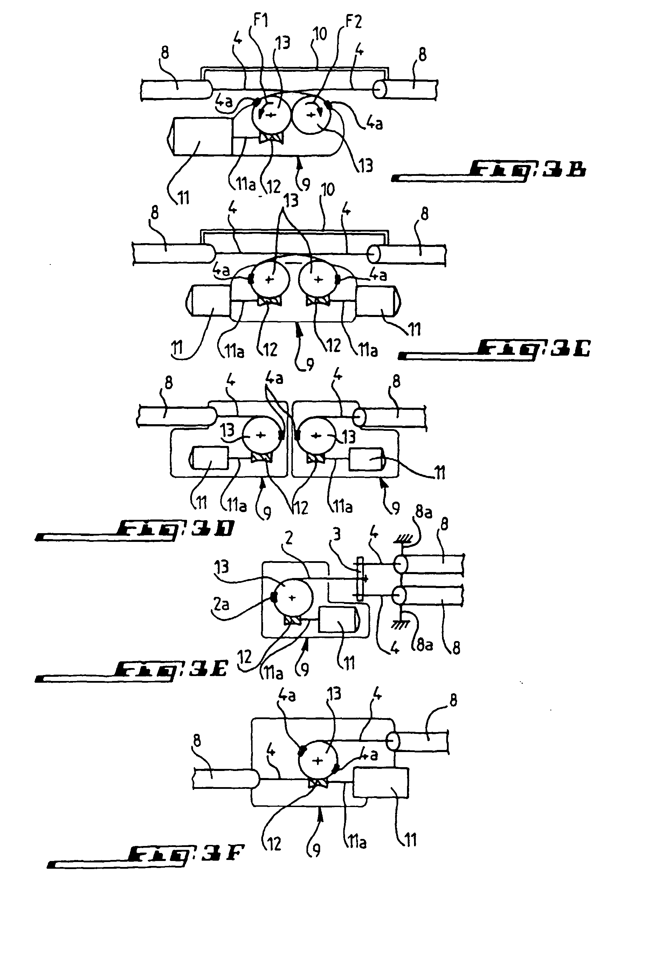

Le mode de réalisation représenté sur la figure 3B est identique à celui de la figure 3A, sauf que les deux roues 13 engrènent mutuellement par l'intermédiaire de leur périphérie, un seul moteur 11 servant à entraîner les deux roues précitées.

Les flèches F1 et F2 indiquent les sens de rotation opposés des deux roues 13.

Dans la variante de la figure 3C, les deux roues 13 sont désaccouplées et deux moteurs électriques 11 distincts auxquels sont associées respectivement une vis sans fin 12 servent à entraîner séparément chacune des deux roues précitées.

Dans ce cas, on peut prévoir un dispositif électrique pour synchroniser l'actionnement des deux câbles 4 et éviter qu'une force de freinage différente soit appliquée sur chacune des roues du véhicule.

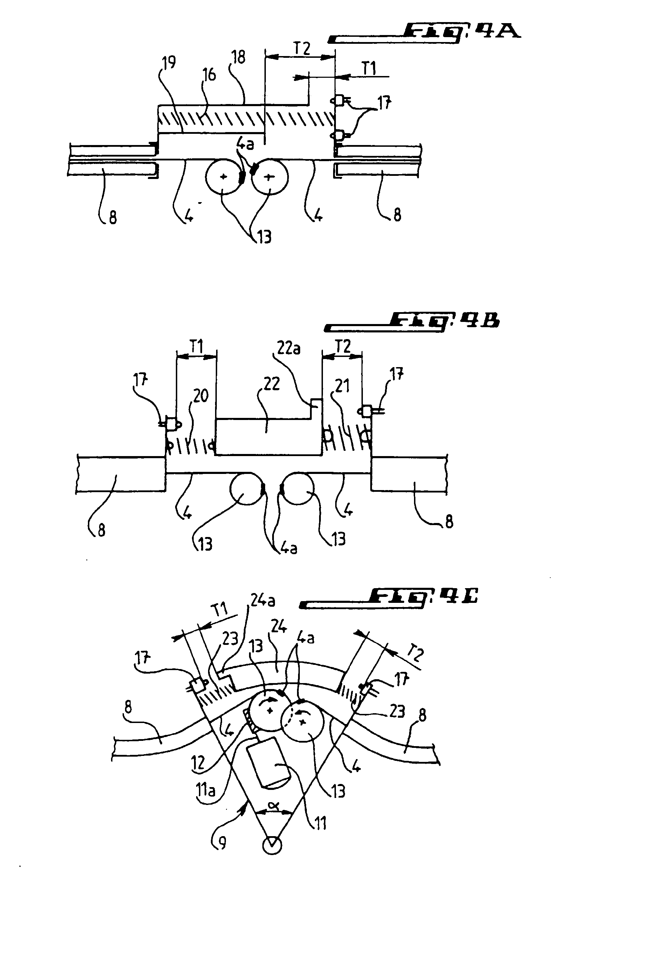

Dans les figures 3A à 3C, on voit que les câbles 4 se croisent sensiblement au niveau de l'intersection des deux roues 13, chaque câble s'étendant en sens opposé, et dans une direction identique. On peut prévoir toutefois que les câbles gainés 4 s'étendent dans deux directions distinctes formant un angle entre elles (voir figure 4C).

La figure 3D est analogue à la figure 3C, sauf qu'ici les câbles 4 ne se croisent pas.

On obtient ainsi deux groupes moto-réducteurs distincts 9, alors que dans le mode de réalisation de la figure 3C les deux moteurs électriques 11 et les organes associés forment un seul bloc moteur.

La différence d'agencement des câbles 4 se justifie par des raisons d'encombrement à l'intérieur du véhicule.

Dans le mode de réalisation représenté sur la figure 3E, un seul moteur 11 entraînant en rotation une unique roue dentée 13 sert à appliquer une tension dans deux câbles gainés 4, par l'intermédiaire d'un câble intermédiaire 2 attaché à une extrémité à la roue dentée 13 au point 2a et à son autre extrémité à un palonnier formant étrier 3 auquel sont reliés les câbles 4 précités.

Dans ce cas, les câbles 4 peuvent s'étendre dans des directions sensiblement parallèles, et on voit que les gaines 8 sont rigidement fixées en 8a.

Sur la figure 3F, deux câbles 4 sont attachés directement à la même roue dentée 13 qui est entraînée en rotation par un seul moteur 11.

Les câbles gainés 4 s'étendent dans une direction sensiblement identique mais en sens opposés, tout en étant décalés d'une distance égale par exemple au diamètre de la roue dentée 13, alors que dans les figures 3A à 3D, les câbles sont alignés.

De préférence, les deux câbles 4 sont attachés à la roue dentée 13 en des points diamétralement opposés afin que les couples engendrés par chacun des câbles 4 se compensent.

Les différents agencements des blocs moteurs 9 illustrés sur les figures 3A à 3F peuvent être appliqués indifféremment aux figures 4A à 4C.

Ces dernières illustrent en effet plus particulièrement des moyens de régulation de la tension du câble selon l'invention.

Sur la figure 4A, la pièce rigide 10 est remplacée par un ressort 16 qui relie les deux extrémités libres des gaines 8 des câbles 4.

Deux interrupteurs 17 sont attachés à une extrémité de l'une des deux gaines 8 dans une direction sensiblement perpendiculaire à la direction du câble 4, lesdits interrupteurs 17 faisant face respectivement à des tiges 18, 19 servant de butées et reliées à l'extrémité libre de l'autre gaine 8.

L'une 18 des tiges est plus longue que l'autre 19 de façon à venir en contact la première avec l'interrupteur en vis-à-vis 17, lorsque l'on tire sur les câbles 4.

Si l'on continue à tirer sur les câbles 4, alors que la première butée 18 est en contact avec l'interrupteur associé 17, ladite première butée 18 s'escamote ou se rétracte, jusqu'à ce que la deuxième butée 19 vienne en contact avec l'autre interrupteur en vis-à-vis 17.

On peut prévoir par exemple que la tige 18 soit télescopique et sollicitée en position maximale étendue par des moyens élastiques internes.

On a représenté par T1 et T2 les courses de chaque butée 18 et 19 pour venir en contact avec l'interrupteur en vis-à-vis 17 et correspondant à l'application d'une tension T1 et T2 dans les câbles 4.

On peut prévoir par exemple que pour un déplacement relatif égal à T1 des gaines 8, la tension engendrée dans ces câbles corresponde à une force de freinage de l'ordre de 2m/s² lorsque le véhicule roule, et pour un déplacement relatif égal à T2, la force de freinage engendrée soit plus forte de manière à maintenir le véhicule à l'arrêt avec poids total en charge dans une pente de l'ordre de 30 %.

Sur la figure 4B, le ressort 16 est remplacé par un petit ressort 20 et un plus gros ressort 21 de raideurs différentes reliés respectivement à l'une des deux gaines 8 et entre lesquels est interposé un bloc en forme de L servant de butée 22.

Les deux interrupteurs 17 précités sont fixés respectivement à l'une des deux gaines 8 et agencés face à une extrémité opposée du bloc de butée 22.

Le ressort 20 ayant une raideur moindre, lors de la mise en tension des câbles 4, le bloc 22 viendra d'abord en butée contre l'interrupteur 17 associé au ressort 20, puis viendra en butée avec l'interrupteur 17 associé au ressort 21 lorsque la traction sur les câbles 4 est poursuivie.

L'écartement matérialisé par T1 et T2 sur la figure 4B peut être le même, mais la tension appliquée in fine sur les câbles est différente en raison de la différence des raideurs des ressorts 20 et 21.

La base 22a du bloc 22 en L sert de butée pour l'interrupteur 17 correspondant à la tension T2.

La figure 4C représente encore une autre variante de ce mode de réalisation, dans laquelle deux ressorts par exemple identiques 23 sont fixés aux extrémités des deux gaines 8 précitées, entre lesquels ressorts est interposé un bloc de butée 24 en forme générale d'arc de cercle.

Le bloc 24 comporte à l'une de ses extrémités opposées une partie circonférentiellement saillante 24a qui s'étend partiellement le long de l'un des ressorts 23 de manière à venir en contact la première avec l'interrupteur 17 associé.

On voit sur la figure 4C que les extrémités des gaines 8 définissent entre elles un angle fermé α, de sorte que le bloc 24 puisse se déplacer en translation circulaire entre les interrupteurs 17, et un logement en V est défini pour le bloc moteur 9.

Les câbles 4 s'étendent ici dans des sens opposés, et dans des directions non parallèles définissant entre elles un angle complémentaire à l'angle α précité.

On comprend donc que les deux câbles 4 ne sont pas forcément alignés ni parallèles, leur agencement relatif étant adapté à la place disponible dans le véhicule.

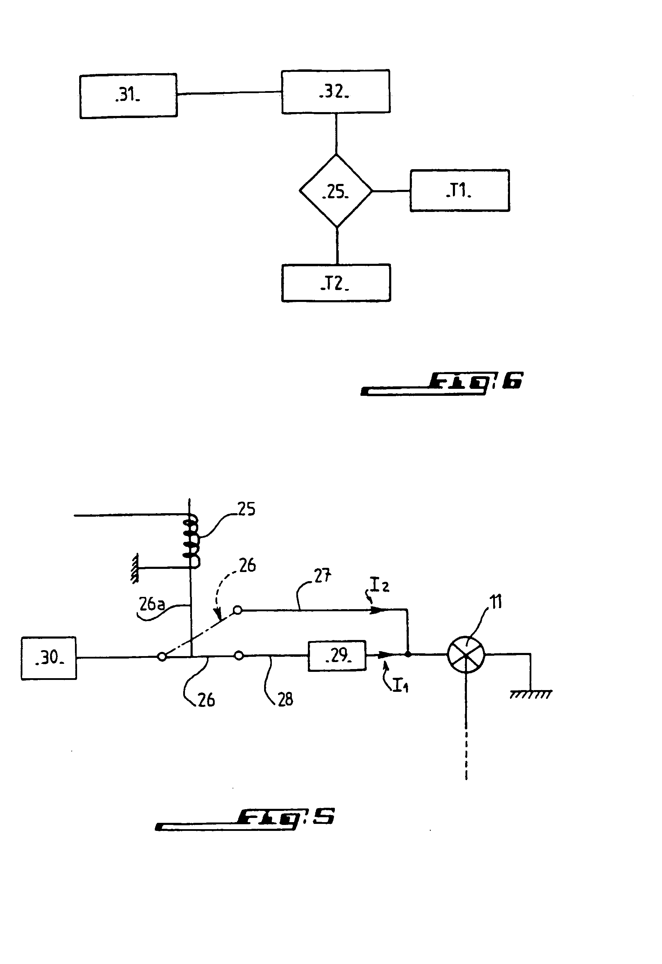

La figure 5 représente un autre mode de réalisation des moyens de régulation de la tension des câbles selon l'invention.

Ces moyens de régulation sont constitués ici d'un circuit électrique comportant un électro-aimant 25, une bascule ou commutateur 26, deux branches parallèles 27, 28 dont l'une 28 comporte une résistance 29 plus grande.

Les deux branches 27, 28 précitées s'embranchent en aval sur le moteur électrique 11, alors que les extrémités amont desdites branches sont sélectivement reliées à une source d'énergie, telle que la batterie 30 à 12 V du véhicule automobile, en fonction de la position de la bascule 26.

Lorsque l'électro-aimant 25 est au repos ou dans un état non excité, la bascule 26 est dans la position représentée en trait plein sur la figure 5, de sorte qu'un courant I1 d'intensité plus faible soit délivré au moteur 11, correspondant à la tension T1 à appliquer sur les câbles.

Lorsque l'électro-aimant 25 est excité, la bascule 26 est dans la position représentée en traits mixtes sur la .figure 5, dans laquelle un courant I2 d'intensité plus élevée est délivré au moteur électrique 11, correspondant à la tension T2 à appliquer sur les câbles.

La bascule 26 est attirée en position surélevée par l'intermédiaire d'une tige 26a traversant l'électro-aimant 25.

Nous allons maintenant décrire le fonctionnement du système de l'invention en référence aux figures 5 et 6.

On a indiqué schématiquement en 31 sur la figure 6 les moyens de détection de l'état ou de la vitesse du véhicule, constitués par exemple du système anti-blocage des freins, désigné communément par ABS.

La commande électrique du système est indiquée schématiquement en 32 sur la figure 6 et peut être constituée d'un interrupteur ayant la forme d'un mini-frein à main au niveau du tableau de bord de la cabine du véhicule.

Lorsque la commande 32 du frein à main est actionnée, le circuit électrique actionnant le moteur électrique 11 est mis sous tension, dans des conditions différentes dépendant de l'état du véhicule détecté par les moyens de détection 31.

Dans le cas de la figure 5, si les moyens de détection 31 indiquent que le véhicule est à l'arrêt, l'électro-aimant 25 est mis sous une tension de 12 V provoquant le basculement du commutateur 26 vers la position indiquée en traits mixtes, de sorte que le courant I2 est délivré au moteur 11, engendrant une tension T2 dans les câbles assurant le maintien du véhicule à l'arrêt avec poids total en charge dans une pente de 30 %.

Si les moyens de détection 31 signalent que le véhicule roule, l'électro-aimant 25 est mis sous une tension de 0 V, laissant la bascule 26 dans la position illustrée en trait plein sur la figure 5, de sorte qu'un courant I1 est délivré au moteur électrique 11, engendrant une tension T1 dans les câbles pour appliquer une force de freinage de l'ordre de 2m/s² sur les roues du véhicule.

Dans les modes de réalisation représentés sur les figures 4A à 4C, lorsque l'interrupteur de commande 32 est activé, le circuit d'actionnement du moteur électrique 11 est branché sélectivement sur l'un des deux interrupteurs 17 précités en fonction de l'état détecté du véhicule.

Lorsque les moyens de détection 31 indiquent que le véhicule est à l'arrêt, l'interrupteur 17 correspondant à la tension T2 est mis sous tension, alors que si le véhicule roule, l'autre interrupteur 17 correspondant à la tension T1 est mis sous tension.

Le moteur électrique 11 va poursuivre son action de traction sur les câbles 4 jusqu'à ce que la butée 18 (figure 4A) vienne en contact avec l'interrupteur 17 en vis-à-vis, ce qui provoque l'interruption de l'alimentation du moteur électrique 11, si une tension T1 a été sélectionnée.

En revanche, si la tension T2 a été sélectionnée, la mise en contact de la butée 18 avec l'interrupteur 17 est sans effet et le moteur 11 poursuit son action jusqu'à ce que la butée 19 vienne en contact avec l'interrupteur en vis-à-vis 17, ce qui provoque alors l'interruption de l'alimentation du moteur électrique 11.

Ce mode de réalisation est particulièrement avantageux, car si les câbles 4 subissent une dilatation ou un allongement accidentel ou temporaire, les gaines 8 associées s'écarteront et provoqueront ainsi une rupture de contact entre l'interrupteur et la butée associée, ce qui entraînera la reprise du fonctionnement du moteur électrique 11 jusqu'à ce que l'interrupteur et la butée associée soient à nouveau en contact.

Dans le cas de la figure 5, pour éviter que le moteur électrique 11 soit constamment sous tension lorsque la commande 32 est activée, et pour ne pas griller les composants électriques du circuit, on peut prévoir une unité de temporisation (non représentée) destinée à interrompre l'alimentation du moteur électrique de manière séquentielle, l'effort de tension exercé par le moteur électrique 11 sur les câbles étant maintenu pendant les intervalles d'interruption par l'irréversibilité du moteur et les éventuelles variations de longueur des câbles étant rattrapées par la mise sous tension du moteur électrique pendant le reste du temps.

## Revendications

1. Système de frein de stationnement pour véhicule automobile, comportant un moyen de détection (31) de l'état du véhicule, par exemple arrêt ou roulage, un moyen de commande électrique (32) actionné manuellement pour sélectivement activer ou désactiver au moins un moteur électrique (11) apte à appliquer un effort de tension (T1, T2) sur au moins un câble (4) relié à des récepteurs de frein (5) engendrant un couple de freinage sur les roues du véhicule, et des moyens de régulation de la tension du ou des câbles (4), les moyens de régulation agissant sur l'alimentation électrique du moteur en fonction de l'état du véhicule détecté par le moyen de détection (31), lorsque le moteur est activé par les moyens de commande électrique (32), et exercent une première tension (T1) non nulle prédéterminée lorsque le véhicule roule et une deuxième tension (T2) prédéterminée plus forte que la première tension (T1), lorsque le véhicule est à l'arrêt.

2. Système selon la revendication 1, **caractérisé en ce que** les moyens de régulation de la tension des câbles comportent des moyens d'auto-régulation de cette tension pour compenser les éventuelles chutes de tension des câbles dues à des paramètres extérieurs, tels que la dilatation du câble en fonction de la température.

3. Système selon la revendication 1 ou 2, **caractérisé en ce que** les moyens de régulation de la tension des câbles sont constitués d'un circuit (25 à 29) faisant basculer, en fonction de l'état détecté du véhicule, l'alimentation du moteur électrique (11) dans l'une d'au moins deux valeurs d'intensité de courant possibles (I1, I2), correspondant aux tensions (T1, T2) à appliquer sur les câbles (4).

4. Système selon les revendications 2 et 3, **caractérisé en ce que** les moyens d'auto-régulation comportent une unité de temporisation destinée à interrompre l'alimentation du moteur électrique (11) de manière séquentielle, l'effort de tension (T1, T2) exercé par le moteur sur les câbles (4) étant maintenu pendant les intervalles d'interruption par l'irréversibilité du moteur et les éventuelles variations de longueur du câble étant rattrapées par la mise sous tension du moteur électrique pendant le reste du temps.

5. Système selon la revendication 3 ou 4, **caractérisé en ce que** le circuit précité comporte un électro-aimant (25) apte à faire sélectivement basculer l'alimentation (30) du moteur électrique (11) vers l'une d'une pluralité de branches en parallèle (27, 28) ayant des résistances (29) différentes, en fonction de l'état détecté du véhicule.

6. Système selon la revendication 1 ou 2, **caractérisé en ce que** les moyens de régulation de la tension des câbles sont constitués d'au moins une paire d'interrupteurs (17) et une paire de butées (18, 19 ; 22 ; 24) en vis-à-vis, au moins l'une desdites paires étant déplaçable avec la gaine (8) d'au moins un câble (4), l'un des interrupteurs étant sélectivement incorporé en position de fermeture au circuit d'alimentation en courant du moteur électrique (11) en fonction de l'état détecté du véhicule, les interrupteurs et les butées en vis-à-vis étant agencés de sorte que la mise en contact de l'une des butées avec l'interrupteur associé provoque son ouverture interrompant l'alimentation du moteur, les courses relatives de chaque interrupteur par rapport à la butée associée étant différentes et déterminées pour correspondre aux différentes tensions à appliquer sur les câbles.

7. Système selon les revendications 2 et 6, **caractérisé en ce que** les moyens d'auto-régulation consistent à maintenir constamment sous tension le circuit d'alimentation précité même lorsque l'interrupteur (17) est en position ouverte, de sorte qu'une perte de contact entre l'interrupteur et la butée associée, résultant par exemple d'une chute de tension dans le câble, provoque la fermeture du circuit d'alimentation du moteur électrique jusqu'à ce que l'interrupteur vienne à nouveau en contact avec la butée.

8. Système selon la revendication 6 ou 7, **caractérisé en ce que** l'interrupteur (17) et la butée (18, 19) associée sont solidaires en déplacement respectivement de l'extrémité libre de deux gaines (8) distinctes qui sont reliées ensemble par un moyen élastique (16).

9. Système selon la revendication 6 ou 7, **caractérisé en ce que** la paire de butées précitée forme une seule pièce (22, 24) intercalée entre les extrémités libres de deux gaines distinctes (8) par l'intermédiaire de deux moyens élastiques (20 ; 21 ; 23), les extrémités opposées de ladite pièce faisant face respectivement à l'un des interrupteurs de ladite paire d'interrupteurs (17) attachés aux extrémités libres des gaines (8).

10. Système selon la revendication 9, **caractérisé en ce que** la pièce précitée (24) forme un arc de cercle déplaçable en translation circulaire entre les extrémités libres des gaines (8) qui définissent entre elles un logement en V pour le bloc moteur (9) du moteur électrique (11).

11. Système selon l'une des revendications précédentes, **caractérisé en ce que** le moteur électrique (11) précité est à entraînement à vis sans fin (12) de type autobloquant, rendant le moteur irréversible lorsque son alimentation en courant est coupée, ladite vis sans fin (12) engrènant avec une roue dentée (13) sur laquelle vient s'enrouler au moins l'un des câbles (4) précités.

12. Système selon la revendication 11, **caractérisé en ce que** deux câbles (4) s'étendant sensiblement en sens opposés sont attachés à une même roue dentée (13), de préférence en deux points (4a) diamètralement opposés de celle-ci, et viennent s'enrouler sur deux parties distinctes de ladite roue.

13. Système selon la revendication 11, **caractérisé en ce que** la roue dentée (13) entraînée par le moteur (11) et sur laquelle s'enroule un câble (4), engrène avec une autre roue dentée (13) sur laquelle vient s'enrouler en sens opposé un autre câble (4).

14. Système selon la revendication 13, **caractérisé en ce que** les deux roues dentées précitées (13) engrènent mutuellement par l'intermédiaire de pignons de plus faible diamètre (14) ou par leur périphérie dentée.

15. Système selon l'une des revendications 11 à 14, **caractérisé en ce que** les deux câbles précités qui s'étendent en sens opposés en direction d'un récepteur de frein (5) se croisent à l'intersection des deux roues dentées (13).

16. Système selon la revendication 11, **caractérisé en ce qu'**un unique câble (2) vient s'enrouler sur la roue dentée (13) entraînée par le moteur (11), ce câble étant relié à un palonnier (3) auquel sont fixés les câbles (4) reliés aux récepteurs de frein (5).

17. Système selon l'une des revendications précédentes, **caractérisé en ce que** la première tension précitée (T1) correspond à une force de décélération de l'ordre de 2m/s².

18. Système selon l'une des revendications précédentes, **caractérisé en ce que** la seconde tension précitée (T2) correspond à une force de freinage assurant le maintien du véhicule avec poids total en charge à l'arrêt dans une pente d'environ 30 %.

19. Système selon l'une des revendications précédentes, **caractérisé en ce que** le moyen de détection de l'état du véhicule (31) est un moyen de détection de la vitesse du système anti-blocage des freins, dit ABS.

## Claims

1. Parking brake system for motor vehicle, comprising a detection means (31) for detecting a state of the vehicle, for example stoppage or running, an electric control means (32) which is manually actuated, for selectively activating or desactivating at least one electric motor (11) able to apply a tension strength (T1, T2) on at least one cable (4) connected to brake receivers (5) generating a braking torque on the vehicle wheels, and means for regulating the tension of the at least one cable (4), the regulating means acting on the electric power supply of the motor in function of the state of the vehicle as detected by the detection means (31), when the motor is activated by the electric control means (32), and exerting a predetermined first tension (T1) not equal to zero when the vehicle runs and a predetermined second tension (T2) that is stronger than the first tension (T1), when the vehicle is at stoppage.

2. System according to claim 1, **characterized in that** the means for regulating the cable tension comprise means for self-regulating this tension and compensating possible drop in tension of the cables due to outer parameters, such as expansion of the cable in function of temperature.

3. System according to claim 1 or 2, **characterized in that** the means for regulating the cable tension are formed by a circuit (25 to 29) causing the power supply of the electric motor (11) to switch, in function of the state of the vehicle as detected into one of at least two possible current intensity values (I1, 12), corresponding to the tensions (T1, T2) to be applied on the cables (4).

4. System according to claims 2 and 3, **characterized in that** the self-regulating means comprise a time delay unit provided to switch-off the power supply of the electric motor (11) in a sequential manner, the tension strength (T1, T2) exerted by the motor of the cables (4) being maintained during the switching-off intervals by means of the irreversibility of the motor, and the possible variations in length of the cable being taken up by the switching-on of the electric motor during the remaining time.

5. System according to claim 3 or 4, **characterized in that** said circuit comprises an electro-magnet (25) able to cause the power supply (30) of the electric motor (11) to selectively switch to one of a plurality of parallel arms (27,28) having different resistances (29), in function of the vehicle state as detected

6. System according to claim 1 or 2, **characterized in that** the means for regulating the cable tension are formed by at least one pair of switches (17) and one pair of abutments (18, 19; 22; 24) oppositely arranged, at least one of said pairs being movable with the sheath (8) of at least one cable (4), one of the switches being selectively incorporated in a closing position to the circuit for supplying the electric motor (11) in current in function of the vehicle state as detected, the oppositely arranged switches and abutments being designed so that the contacting of one of the abutments with the associated switch causes the opening thereof by switching-off the power supply of the motor, the relative strokes of each switch with respect to the associated abutment being different and determined for corresponding to the different tensions to be applied on the cables.

7. System according to claims 2 and 6, **characterized in that** the self-regulating means are provided for constantly maintaining under voltage said supplying circuit even when the switch (17) is in an open position, so that a loss of contact between the switch and the associated abutment, resulting for example from a drop of tension in the cable, causes a closing of the supplying circuit of the electric motor until the switch comes again into contact with the abutment.

8. System according to claims 6 or 7, **characterized in that** the switch (17) and the associated abutment (18, 19) are integrally moved respectively with the free end of two separate sheaths (8) which are connected together by a resilient means (16).

9. System according to claim 6 or 7, **characterized in that** said pair of abutments forms a single piece (22, 24) intercalated between the free ends of two separate sheaths (8) by means of two resilient means (20; 21; 23), the opposite ends of said piece respectively facing one of the switches of said pair of switches (17) attached to the free ends of the sheath (8).

10. System according to claim 9, **characterized in that** said piece (24) forms an arc of a circle movable in a circular translation between the free ends of the sheaths (8) which define therebetween a V-shaped housing for the motor unit (9) of the electric motor (11).

11. System according to one of the preceding claims, **characterized in that** said electric motor (11) is driven by a self-blocking type endless screw (12), causing the motor to be irreversible when its supply in current is switched-off, said endless screw (12) being in a gearing engagement with a toothed wheel (13) on which is wound at least one of said cables (4).

12. System according to claim 11, **characterized in that** two cables (4) that are extended substantially in opposite directions are attached to a same toothed wheel (13), preferably at two diametrically opposed points (4a) thereof, and come to be wound on two separate parts of said wheel.

13. System according to claim 11, **characterized in that** the toothed wheel (13), driven by the motor (11) and on which is wound a cable (4), is in a gearing engagement with another toothed wheel (13) on which another cable (4) comes to be wound in opposite direction.

14. System according to claim 13, **characterized in that** said two toothed wheels (13) are mutually in gearing engagement by means of a smaller diameter pinions (13) or by their toothed periphery.

15. System according to one of claims 11 to 14,
**characterized in that** said two cables which are extended in opposite directions towards a brake receiver (5) are crossed at the intersection of the two toothed wheels (13).

16. System according to claim 11, **characterized in that** a single cable (2) comes to be wound on the toothed wheel (13) that is driven by the motor (11), this cable being connected to a swingle-bar (3) to which the cables (4) connected to the brake receivers (5) are fixed.

17. System according to one of the preceding claims, **characterized in that** said first tension (T1) corresponds to a negative acceleration force of about 2 m/s².

18. System according to one of the preceding claims, **characterized in that** said second tension (T2) corresponds to a braking force providing the vehicle with a total loading weight to be maintained at stoppage in a slope of about 30%.

19. System according to one of the preceding claims, **characterized in that** the system for detecting the state of the vehicle (31) is a means for detecting the speed of the brake anti-blocking system, so called ABS system.

## Patentansprüche

1. Feststellbremsanlage für Kraftfahrzeug, umfassend ein Erfassungsmittel (31) des Zustandes des Fahrzeugs, zum Beispiel Stillstand oder Fahrbetrieb, ein manuell betätigtes elektrisches Steuermittel (32) zum selektiven Aktivieren oder Entaktivieren wenigstens eines Elektromotors (11), der geeignet ist, eine Streckspannung (T1, T2) auf wenigstens ein Kabel (4) auszuüben, das mit Bremsaufnahmen (5) verbunden ist, die ein Bremsmoment auf den Rädern des Fahrzeugs erzeugen, und Mittel zur Regulierung der Spannung des oder der Kabel (4), wobei die Mittel zur Regulierung in Abhängigkeit von dem durch das Erfassungsmittel (31) festgestellten Zustand des Fahrzeugs auf die Stromversorgung des Motors wirken, wenn der Motor durch die elektrischen Steuermittel (32) aktiviert ist, und eine vorbestimmte erste Spannung (T1), die nicht Null ist, wenn das Fahrzeug fährt, und eine vorbestimmte zweite Spannung (T2), die höher als die erste Spannung (T1) ist, wenn das Fahrzeug steht, ausüben.

2. Anlage gemäß Anspruch 1, **dadurch gekennzeichnet, daß** die Mittel zur Spannung der Kabel selbstregulierende Mittel dieser Spannung der Kabel umfassen, um eventuelle Spannungsabfälle der Kabel auszugleichen, die auf externe Parameter wie die Ausdehnung der Kabel in Abhängigkeit von der Temperatur zurückzuführen sind.

3. Anlage gemäß Anspruch 1 oder 2, **dadurch gekennzeichnet, daß** die Mittel zur Regulierung der Spannung der Kabel aus einem Stromkreis (25 bis 29) gebildet werden, der die Stromversorgung des Elektromotors (11) in Abhängigkeit vom festgestellten Zustand des Fahrzeugs in einen von wenigstens zwei möglichen den auf die Kabel (4) auszuübenden Spannungen (T1, T2) entsprechenden Intensitätswerten des Stroms (I1, 12) umschaltet.

4. Anlage gemäß Anspruch 2 und 3, **dadurch gekennzeichnet, daß** die selbstregulierenden Mittel eine Verzögerungseinheit umfassen, die dazu bestimmt ist, die Stromversorgung des Elektromotors (11) fortlaufend zu unterbrechen, wobei die auf die Kabel (4) vom Motor ausgeübte Streckspannung (T1, T2) während der Abschaltintervalle durch die Nichtumkehrbarkeit des Motors aufrechterhalten wird und die eventuellen Veränderungen der Kabellänge dadurch aufgefangen werden, daß der Elektromotor während der restlichen Zeit unter Spannung gesetzt wird.

5. Anlage gemäß Anspruch 3 oder 4, **dadurch gekennzeichnet, daß** besagter Stromkreis einen Elektromagneten (25) umfaßt, der geeignet ist, die Stromversorgung (30) des Elektromotors (11) selektiv in eine von einer Vielzahl von Parallelverzweigungen (27, 28) umzuschalten, die in Abhängigkeit vom festgestellten Zustand des Fahrzeugs verschiedene Widerstände (29) haben.

6. Anlage gemäß Anspruch 1 oder 2, **dadurch gekennzeichnet, daß** die Mittel zur Regulierung der Spannung der Kabel aus wenigstens einem Schalterpaar (17) und einem gegenüberliegenden Anschlagspaar (18, 19; 22; 24) gebildet sind, wobei wenigstens eines der besagten Paare mit der Verkleidung (8) wenigstens eines Kabels (4) verschiebbar ist, wobei einer der Schalter selektiv in die Aus-Stellung in den Stromkreis zur Versorgung des Elektromotors (11) in Abhängigkeit vom festgestellten Zustand des Fahrzeugs eingebaut ist, wobei die Schalter und die gegenüberliegenden Anschläge derart angeordnet sind, daß der Kontakt eines der Anschläge mit dem dazugehörigen Schalter seine die Stromversorgung des Motors unterbrechende Öffnung hervorruft, wobei der jeweilige Lauf jedes Schalters im Verhältnis zum dazugehörigen Anschlag unterschiedlich ist und bestimmt ist, um den verschiedenen auf die Kabel auszuübenden Spannungen zu entsprechen.

7. Anlage gemäß Anspruch 2 und 6, **dadurch gekennzeichnet, daß** die selbstregulierenden Mittel darin bestehen, besagten Stromkreis zur Versorgung ständig unter Spannung zu halten, selbst wenn der Schalter (17) in geöffneter Position ist, derart, daß ein Verlust des Kontakts zwischen dem Schalter und dem dazugehörigen Anschlag, der zum Beispiel aus einem Spannungsabfall im Kabel resultiert, die Schließung des Stromkreises zur Versorgung des Elektromotors hervorruft, bis der Schalter erneut mit dem Anschlag in Kontakt kommt.

8. Anlage gemäß Anspruch 6 oder 7 **dadurch gekennzeichnet, daß** der Schalter (17) und der dazugehörige Anschlag (18, 19) bei der Verschiebung des äußeren freien Endes der zwei verschiedenen Verkleidungen (8), die durch ein elastisches Mittel (16) zusammen verbunden sind, fest miteinander verbunden sind.

9. Anlage gemäß Anspruch 6 oder 7, **dadurch gekennzeichnet, daß** besagtes Anschlagspaar ein einziges Stück (22, 24) bildet, das zwischen den äußeren freien Enden der zwei verschiedenen Verkleidungen (8) mittels zweier elastischer Mittel (20; 21; 23) verkeilt ist, wobei die gegenüberliegenden äußeren Enden besagten Stücks jeweils einem der Schalter besagten Schalterpaares (17) gegenüberliegen, das an den äußeren freien Enden der Verkleidungen (8) befestigt ist.

10. Anlage gemäß Anspruch 9, **dadurch gekennzeichnet, daß** besagtes Stück (24) einen Kreisbogen bildet, der in zirkularer Translation zwischen den freien äußeren Enden der Verkleidungen (8) verschiebbar ist, die untereinander eine V-förmige Aufnahme für den Motorblock (9) des Elektromotors (11) definieren.

11. Anlage gemäß einem der vorherigen Ansprüche, **dadurch gekennzeichnet, daß** besagter Elektromotor (11) einen Endlosschneckenantrieb (12) der selbsthemmenden Art hat, der den Motor nicht umkehrbar macht, wenn seine Stromversorgung unterbrochen ist, wobei besagte Endlosschnecke (12) in ein Zahnrad (13), auf dem sich wenigstens eines der besagten Kabel (4) aufrollt, eingreift.

12. Anlage gemäß Anspruch 11, **dadurch gekennzeichnet, daß** zwei sich deutlich in entgegengesetzter Richtung erstreckende Kabel (4) an einem selben Zahnrad (13) befestigt sind, bevorzugt an zwei ihm genau entgegengesetzten Punkten (4a), und sich auf zwei verschiedenen Teilen besagten Rades aufrollen.

13. Anlage gemäß Anspruch 11, **dadurch gekennzeichnet, daß** das durch den Motor (11) angetriebene Zahnrad (13) auf dem sich ein Kabel (4) aufrollt, in ein anderes Zahnrad (13) eingreift, auf dem sich in entgegengesetzter Richtung ein anderes Kabel (4) aufrollt.

14. Anlage gemäß Anspruch 13, **dadurch gekennzeichnet, daß** die zwei besagten Zahnräder (13) gegenseitig mittels eines kleinen Zahnrades mit kleinerem Durchmesser (14) oder durch ihre gezahnte Peripherie ineinander eingreifen.

15. Anlage gemäß Anspruch 11 bis 14, **dadurch gekennzeichnet, daß** die zwei besagten Kabel, die sich in entgegengesetzter Richtung einer Bremsaufnahme (5) erstrecken, sich im Schnittpunkt der zwei Zahnräder (13) kreuzen.

16. Anlage gemäß Anspruch 11, **dadurch gekennzeichnet, daß** ein einziges Kabel (2) sich auf dem durch den Motor (11) angetriebenen Zahnrad (13) aufwickelt, wobei dieses Kabel mit einem Steuerknüppel (3) verbunden ist, an dem die mit der Bremsaufnahme (5) verbundenen Kabel (4) befestigt sind.

17. Anlage gemäß einem der vorherigen Ansprüche, **dadurch gekennzeichnet, daß** die erste besagte Spannung (T1) einer Verzögerungskraft in der Größenordnung von 2 m/s² entspricht.

18. Anlage gemäß einem der vorherigen Ansprüche, **dadurch gekennzeichnet, daß** die zweite besagte Spannung (T2) einer Bremskraft entspricht, die das Festhalten des Fahrzeugs mit seinem zulässigen Gesamtgewicht in einer Steigung von ungefähr 30% gewährleistet.

19. Anlage gemäß einem der vorherigen Ansprüche, **dadurch gekennzeichnet, daß** das Erfassungsmittel für den Zustand des Fahrzeugs (31) ein Erfassungsmittel für die Geschwindigkeit des ABS genannten Antiblockiersystems der Bremsen ist.
